# EUROPEAN PATENT SPECIFICATION

(11) **EP 1 930 133 B1**
(45) Date of publication and mention of the grant of the patent: **09.04.2014**
(21) Application number: 08003861.5
(22) Date of filing: 27.02.2001
(51) Int. Cl.: B25J 17/02, B25J 15/06, B25J 9/00

(54) **Robot for handling products in a three-dimensional space**
Roboter zur Handhabung von Produkten in einem dreidimensionalen Raum
Robot pour la manipulation de produits dans un espace tridimensionnel

(30) Priority: 01.03.2000 EP 00104234
(43) Date of publication of application: 11.06.2008
(62) Divisional of application: 01810201.2
(73) Proprietor: Robert Bosch GmbH, 70442 Stuttgart (DE)
(72) Inventor: Ehrat, Matthias, 8235 Lohn (CH)
(74) Representative: Frischknecht, Harry Ralph

(56) References cited:
- WO-A-99/67066
- FR-A- 2 647 763
- FR-A- 2 672 836
- US-A- 4 976 582
- ROOKS BRIAN: "High speed delivery and low cost from new ABB packaging robot" IND ROBOT; INDUSTRIAL ROBOT 1999 MCB UNIV PRESS LTD, BRADFORD, ENGL, vol. 26, no. 4, 1999, pages 267-270, XP002477792

## Description

### Related application

This patent application claims priority of EP patent application No. 00 104 234.0 filed March 1, 2000.

### Field and background of the invention

EP-B 250 470 describes a robot for handling products in a three-dimensional space according to the preamble of claim 1. Three arms are pivotably attached to a base. The three pivoting axes of the arms are arranged in a common plane and form a regular triangle. At the free end of each arm a parallelogram linkage is affixed which other end is connected to a common carrier. The carrier carries in its center a gripper for handling the products. The gripper is joined by a telescopic bar with a servo motor for turning it. The upper joint of that connection is below the axes plane.

### Summary of the invention

The problem which the present invention solves is to increase the volume of space which can be reached by the gripper relative to the length of the arms or conversely to reduce the arm length for the same volume covered. This problem is solved by the invention in which, briefly stated, a robot for handling products in a three-dimensional space is described. The robot comprises a base on which three arms are pivotably supported to pivote around three pivote axes arranged in a common axes plane. The three axes form a triangle with three corners. Each arm is mounted on a shaft. Each shaft is connected to a driving unit, e.g. a pneumatic or electric motor with or without a gear unit. All driving units are connected to a controller. Three connecting linkages connect the free ends of the arms to a carrier which is movable in space in all three linear dimensions and prevented from rotation around all three rotative dimensions. A telescopic fourth linkage connects a gripper rotatably supported on the carrier by two joints with a fourth driving unit fixed to the base. The base has an opening through which the fourth linkage extends. The upper joint of the fourth linkage is significally above the axes plane and on an opposite side of the axes plane than the carrier. No collision between the telescopic linkage and the other linkages can occur within the operating range.

By this measure the range that can be covered by the gripper can be substantially increased for a given arm length or the arm length can be reduced for a given range. This way eather the range or the speed of the robot or both can be increased. Speed is a critical problem with handling robots because it is crucial to the production capacity of a manufacturing or packaging line in which the robot is used.

### Brief description of the drawings

A preferred embodiment of the invention is hereinafter described with reference to the drawings, in which
- Fig. 1: shows a perspectivic view of a robot,
- Fig. 2 - 4: show sectional views of details of the robot, and
- Fig. 5 and 6: show a further embodiment.

### Detailed description of the preferred embodiment

On a common base 1 three shafts 2 are rotatably supported to pivote around three axes 3 arranged in an common plane 4 and forming a regular triangle with three corners 5. Each shaft 2 is connected to a servo motor 6 and a rotary encoder 7 which are both connected to a common controller 8. Each shaft 2 carries an arm 9. The connection 10 of each arm 9 to the shaft 2 is spaced from a middle point 11 of adjacent corners 5. The arms 9 are angled with respect to the axes 3 such that their free ends 12 are about in the central vertical plane of two corners 5.

At the free end 12 each arm 9 carries a cross bar 18 which is parallel to the respective axis 3. The two ends of the cross bar 18 are linked by a parallelogram linkage 19 to a carrier 22. The linkage 19 comprises the cross bar 18, two rods 20 of equal length, a connection 21 at the lower end to the carrier 22 and four joints 23 which are preferably ball joints but could also be cardan joints.

This way the three linkages 19 prevent rotation of the carrier 22 around axes in all three spacial dimensions. The carrier 22 can therefore only displace parallel to itself in response to movement of the arms 9. The controlled rotative movement of the arms 9 around their axes 3 is therefore translated into a linear displacement of the carrier 22.

At it center a gripper shaft 28 is rotatably supported in the carrier 22 to rotate around an axis 29 which is perpendicular to the axes plane 4. A gripper in the form of a suction cup 30 is fixed to the shaft 28 below the carrier 22. An axial boring 31 in the shaft 28 is connected to the underside of the cup 30 and to a radial boring 34 to a connecting ring 32. The ring 32 is fixed to the carrier and has a circumferential groove 33 which communicates with the radial boring 34 and with a flexible transmission line in the form of a tube 35 which is fixed to one of the bars 20 and the respective arm 9 and connected at its upper end to a pneumatic valve 36. The valve 36 is connected, on its pneumatic side, with a vacuum pump 37 and on its electric side with the controller 8.

The upper end of the shaft 28 is connected by a cardan joint 42 to a telescopic shaft 43 consisting of two sections, namely an upper section 45 and a lower section 44. The sections 44, 45 are prismatic pipes or cylindrical pipes with non-circular cross section. The outside cross section of one of the pipes corresponds to the inside cross section of the other pipe so that they can slide relative to each other longitudinally but are rotatably fixed relative to each other. At the upper end the upper section 45 is connected by a further cardan joint 46 to the output shaft 47 of a further servo motor 48 and a rotary encoder 48'.

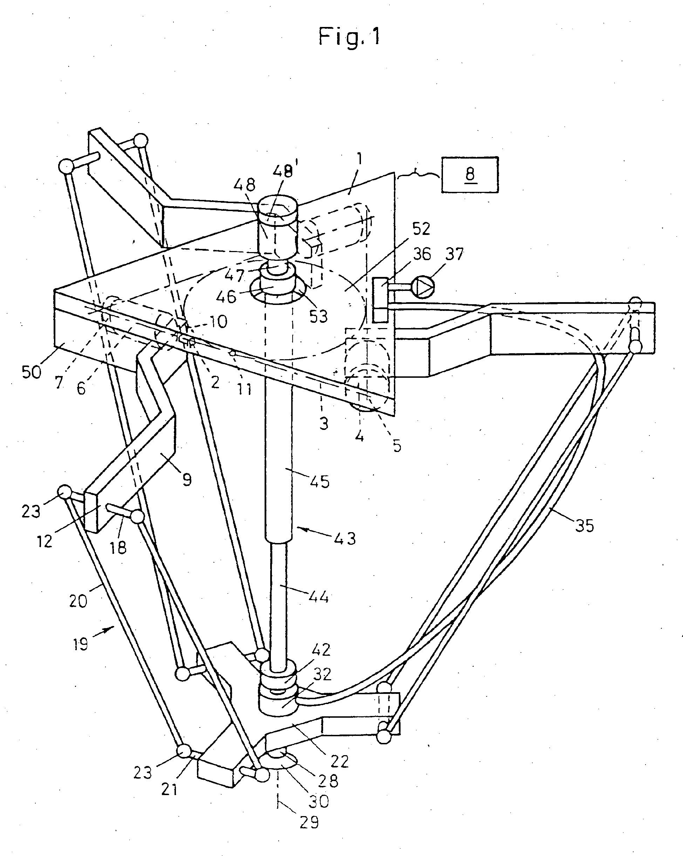

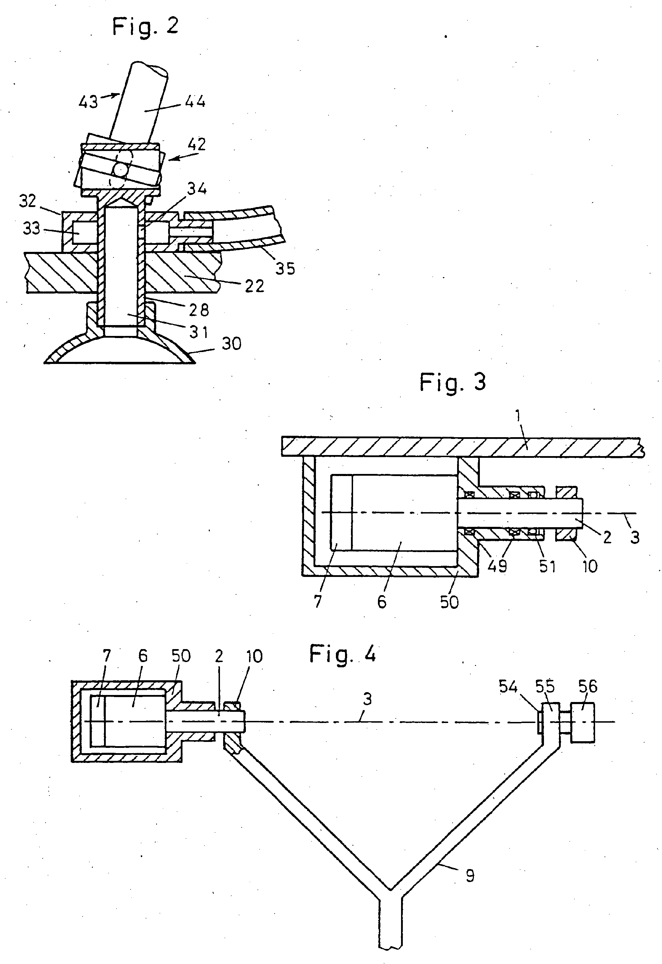

As shown in Fig. 3, the motors 6, encoders 7 and part of the shafts 2 including their bearings 49 are enclosed by a liquid tight housing 50 with a seal 51 around the shaft 2. For clarity reasons only one of the housings 50 is shown in Fig. 1. In the illustrated embodiment the base 1 is a triangular plate arranged parallel to and above the axes plane 4. Because of the angled arms 9 and the spacing of the connection 10 from the middle point 11 the base 1, housings 50 and arms 9 leave a central open space or opening 52 in the axes plane 4 which extends at least to the axes 3. The telescopic shaft 43 extends through that opening 52 and through a further central opening 53 in the base 1 itself. The cardan joint 46 is above the base 1 and therefore also above the axes plane 4.

Because of the large spacing between the cardan joints 42 and 46 the two sections 44, 45 of the telescopic shaft 43 are considerably longer than the telescope of the prior art according to EP-B 250 470. Therefore, the volume of space within which the gripper 30 can be manipulated is considerably increased for a given length of the arms 9 or, conversely, for a given operating range the arm length can be reduced which means smaller masses to be accelerated, i.e. higher operating speed.

The telescopic shaft 43 composed of only two sections 44, 45 is preferred over a telescopic shaft of three or more sections for two reasons: telescopes with three sections need stroke limitation means between the middle section and each end section which leads to a complicated design and more mass to be accelerated in operation. Three or more section telescopes also have a higher rotational backlash.

If a high accuracy of the turning angle of the gripper is not required the cardan joints 42 and 46 can be replaced by short elastomer tubes. In this case the pneumatic connection between the valve 36 and the suction cup 30 can be led via the telescope shaft 43. Instead of the suction cup 30 other handling tools might be use, e.g. tongs which may also be actuated pneumatically via the tube 35 and a pneumatic cylinder on the carrier 22. The parallelogram linkage 19 can also be replaced by a single bar. In this case the joints at the lower and upper end of that bar must be cardan joints.

Fig. 4 shows a variant of the embodiment of Fig. 1 to 3, in which the arm 9 is Y-shaped and has shafts 2, 54 at both ends 10, 55 of its legs. The shaft 54 is supported in a separate bearing 56. In this variant the arm 9 could also be V- or U-shaped. The figure shows the driving unit and the position feedback unit attached to shaft 2. It could also be that this driving unit is attached to shaft 54 or that both shafts 2 and 54 are driven with an interlinked driving unit.

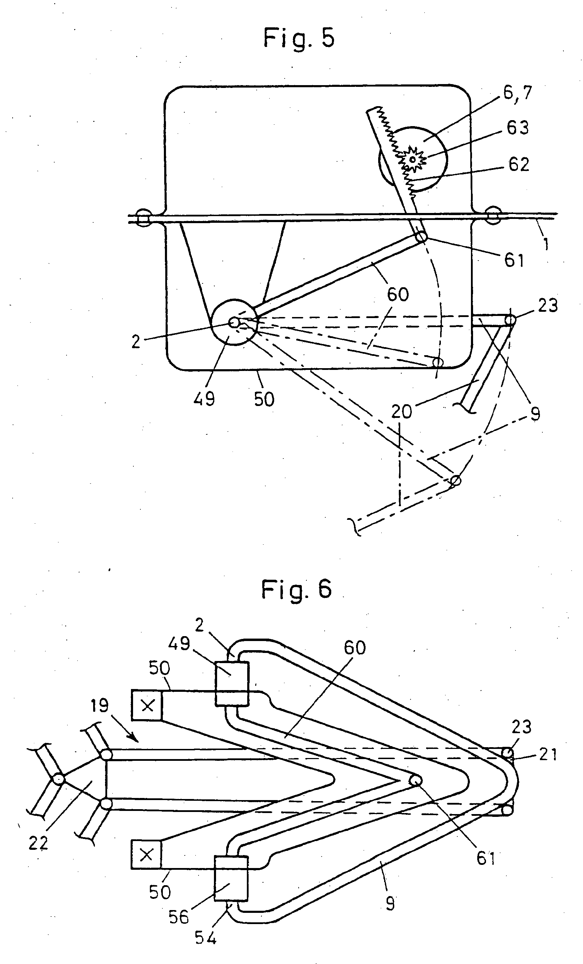

In the embodiment according to Fig. 5 and 6 both bearings 49, 56 are part of the housing 50, which is V-shaped in plan view. The arm 9 is V-shaped and is attached to the shafts 2, 54 on the external side of the housing 50. A further V-shaped arm 60 is attached to the shafts 2, 54 inside the housing 50. At its tip the arm 60 is connected by a bearing 61 to a rack 62 which meshes with a pinion 63 driven by the servo motor 6. The plane of the arm 60 is inclined upwardly with respect to the plane of the arm 9. A spring loaded roller (not shown) forces the rack 62 into contact with the pinion 63 such that the rack-and-pinion reduction gear is back-lash free.

## Claims

1. A robot for handling products in a three-dimensional space, comprising
- three arms (9) that are pivotably supported by shafts (2) on a common base (1) to pivot around three pivot axes (3) arranged in a common axes plane (4), the axes (3) forming a triangle with three corners, each pivot shaft (2) being connected to a first to third driving unit (6), each driving unit (6) being connected to a common controller (8);
- a connecting first to third linkage (19) connecting a free end of each arm (9) to a carrier (22) which is movable in space in all three linear dimensions and prevented from rotation around all three rotative dimensions;
- a telescopic fourth linkage (43) which at its one end is connected by a first joint (46) to a fourth driving unit (48) fixed to the base (1) and at its other end by a second joint (42) to a gripper (30) rotatably supported in the carrier (22), **characterised in that**
- the axes plane (4) has an opening (52) through which the fourth linkage (43) extends,
- the base (1) is arranged above the axes plane (4) and has a opening (53) through which the fourth linkage (43) is connected to the fourth driving unit (48), and
- the first joint (46) is above the axis plane (4) and on an opposite side of the axes plane (4) than the carrier (22).

2. The robot of claim 1 further comprising a transmission line (35) between the base (1) and the gripper (30) for actuating the gripper.

3. The robot of claim 1 in which all joints of the first to third linkages are cardan joints (23).

4. The robot of claim 1, wherein the first and second joints (46, 42) are cardan joints.

5. The robot of claim 1, wherein a cross section of the opening (52) extends at least to the side lines formed by the triangle of the axes (3).

6. The robot of claim 1, wherein a connection of each arm (9) to its pivot axis (3) is spaced from a middle point (11) between adjacent corners of the triangle.

7. The robot of claim 2, wherein the connecting line comprises a pneumatic flexible tube (35) connected to a pneumatic valve (36) connected to the controller (8).

8. The robot of claim 7, wherein the gripper (30) comprises a suction cup and the pneumatic valve (36) is connected to a vacuum source(37).

9. The robot of claim 7, wherein both joints (46, 42) of the fourth linkage (43) are formed by a flexible tube which can transmit rotary motion, and wherein the transmission line extends through the fourth linkage (43).

10. The robot of claim 1, wherein each first to third driving unit (6) and each respective bearing (49) of each respective shaft (2) is surrounded by a liquid tight housing (50), the housing having a liquid-tight seal (51) around the respective shaft (2) between the respective bearing (49) and a connection (10) of the shaft (2) with the respective arm (9).

## Patentansprüche

1. Roboter zur Handhabung von Produkten in einem dreidimensionalen Räum, der Folgendes umfasst:
- drei Arme (9), die durch Wellen (2) auf einer gemeinsamen Basis (1) schwenkbar abgestützt sind, so dass sie um drei Schwenkachsen (3), die in einer gemeinsamen Achsenebene (4) angeordnet sind, schwenken können, wobei die Achsen (3) ein Dreieck mit drei Ecken bilden, jede Pendelwelle (2) mit einer ersten bis dritten Antriebseinheit (6) verbunden ist und jede Antriebseinheit (6) mit einer gemeinsamen Steuerung (8) verbunden ist;
- ein erstes bis drittes Verbindungsgestänge (19), das ein freies Ende eines jeden Arms (9) mit einem Träger (22) verbindet, der im Raum in allen drei linearen Dimensionen bewegbar ist und dessen Drehung um alle drei Rotationsdimensionen unterbunden wird;
- ein teleskopartiges viertes Gestänge (43), das an seinem einen Ende durch ein erstes Gelenk (46) mit einer an der Basis (1) befestigten vierten Antriebseinheit (48) und an seinem anderen Ende durch ein zweites Gelenk (42) mit einem Greifer (30) verbunden ist, der drehbar im Träger (22) abgestützt ist, **dadurch gekennzeichnet, dass**
- die Achsenebene (4) eine Öffnung (52) hat, durch die sich das vierte Gestänge (43) erstreckt,
- die Basis (1) oberhalb der Achsenebene (4) angeordnet ist und eine Öffnung (53) hat, durch die das vierte Gestänge (43) mit der vierten Antriebseinheit (48) verbunden ist, und dass
- das erste Gelenk (46) sich oberhalb der Achsenebene (4) und, im Verhältnis zum Träger (22), auf einer gegenüberliegenden Seite der Achsenebene (4) befindet.

2. Roboter nach Anspruch 1, der weiterhin eine Übertragungsleitung (35) zwischen der Basis (1) und dem Greifer (30) zur Betätigung des Greifers umfasst.

3. Roboter nach Anspruch 1, bei dem alle Gelenke der ersten bis dritten Gestänge Kardangelenke (23) sind.

4. Roboter nach Anspruch 1, bei dem die ersten und zweiten Gelenke (46, 42) Kardangelenke sind.

5. Roboter nach Anspruch 1, bei dem sich ein Querschnitt der Öffnung (52) mindestens zu den durch das Dreieck der Achsen (3) gebildeten Seitenlinien erstreckt.

6. Roboter nach Anspruch 1, bei dem eine Verbindung eines jeden Arms (9) mit seiner Schwenkachse (3) von einem Mittelpunkt (11) zwischen angrenzenden Ecken des Dreiecks beabstandet ist.

7. Roboter nach Anspruch 2, bei dem die Verbindungsleitung einen flexiblen Pneumatikschlauch (35) umfasst, der mit einem mit der Steuerung (8) verbundenen Pneumatikventil (36) verbunden ist.

8. Roboter nach Anspruch 7, bei dem der Greifer (30) einen Sauger umfasst und das Pneumatikventil (36) mit einer Vakuumquelle (37) verbunden ist.

9. Roboter nach Anspruch 7, bei dem beide Gelenke (46, 42) des vierten Gestänges (43) durch einen flexiblen Schlauch gebildet sind, der Drehbewegungen übertragen kann, und wobei sich die Übertragungsleitung durch das vierte Gestänge (43) erstreckt.

10. Roboter nach Anspruch 1, bei dem jede erste bis dritte Antriebseinheit (6) und jedes jeweilige Lager (49) jeder jeweiligen Welle (2) von einem flüssigkeitsdichten Gehäuse (50) umgeben ist, wobei das Gehäuse eine flüssigkeitsdichte Abdichtung (51) um die jeweilige Welle (2) zwischen dem jeweiligen Lager (49) und einer Verbindung (10) der Welle (2) mit dem jeweiligen Arm (9) aufweist.

## Revendications

1. Robot destiné à manipuler des produits dans un espace à trois dimensions, comportant :
- trois bras (9) supportés de façon pivotante par des arbres (2) sur une base (1) commune pour pivoter autour de trois axes de pivots (3) disposés dans un plan d'axes (4) commun, les axes (3) formant un triangle à trois sommets, chaque arbre de pivot (2) étant connecté à des première à troisième unités d'entraînement (6), chaque unité d'entraînement (6) étant reliée à un contrôleur (8) commun,
- des première à troisième liaisons de connexion (19) connectant une extrémité libre de chaque bras (9) à un support (22) susceptible d'être déplacé dans l'espace dans les trois dimensions linéaires et empêché de tourner autour des trois dimensions rotatives ;
- une quatrième liaison télescopique (43) qui, à une de ses extrémités, est connectée par une première articulation (46) à une quatrième unité d'entraînement (48) fixée à la base (1), et à son autre extrémité par une deuxième articulation (42) à une unité de préhension (30) supportée de façon tournante dans le support (22), **caractérisé en ce que**
- le plan d'axes (4) présente une ouverture (52) à travers laquelle la quatrième liaison (43) s'étend,
- la base (1) est disposée au-dessus du plan d'axes (4) et a une ouverture (53) à travers laquelle la quatrième liaison (43) est connectée à la quatrième unité d'entraînement (48), et
- la première articulation (46) se trouve au-dessus du plan d'axes (4) et est d'un côté opposé du plan d'axes (4) par rapport au support (22).

2. Robot selon la revendication 1 comportant en outre une ligne de transmission (35) entre la base (1) et l'unité de préhension (30) pour actionner l'unité de préhension.

3. Robot selon la revendication 1, dans lequel toutes les articulations des première à troisième liaisons sont des articulations de Cardan (23).

4. Robot selon la revendication 1, où les première et deuxième articulations (46, 42) sont des articulations de Cardan.

5. Robot selon la revendication 1, où une section droite de l'ouverture (52) s'étend au moins jusqu'aux lignes latérales formées par le triangle des axes (3).

6. Robot selon la revendication 1, où une connexion de chaque bras (9) à son axe de pivot (3) est écartée d'un point milieu (11) entre les sommets adjacents du triangle.

7. Robot selon la revendication 2, où la ligne de connexion comporte un tube pneumatique souple (35) connecté à une vanne pneumatique (36) connectée au contrôleur (8).

8. Robot selon la revendication 7, où l'unité de préhension (30) comprend une ventouse d'aspiration et où la vanne pneumatique (36) est connectée à une source de vide (37).

9. Robot selon la revendication 7, où les deux articulations (46, 42) de la quatrième liaison (43) sont formées par un tube souple qui peut transmettre un mouvement de rotation, et où la ligne de transmission s'étend à travers la quatrième liaison (43).

10. Robot selon la revendication 1, où chacune des première à troisième unités d'entraînement (6) et chaque roulement (49) respectif de chaque arbre (2) respectif est entouré(e) par un boîtier (50) étanche aux liquides, le boîtier étant muni d'un joint (51) étanche aux liquides autour de l'arbre respectif (2) entre le roulement respectif (49) et une connexion (10) de l'arbre (2) avec le bras (9) respectif.
